# EUROPEAN PATENT APPLICATION

(11) **EP 1 347 371 A2**
(43) Date of publication of application: **24.09.2003**
(21) Application number: 03251751.8
(22) Date of filing: 20.03.2003
(51) Int. Cl.: G06F 3/12

(54) **Printer driver, printer and method of printing**

(30) Priority: 22.03.2002 JP 2002081786; 07.03.2003 JP 2003061968
(71) Applicant: Ricoh Company, Tokyo 143-8555 (JP)
(72) Inventor: Saitoh, Yutaka, Ohta-ku, Tokyo 143-8555 (JP)
(74) Representative: Leeming, John Gerard

(57) **Abstract**

A method of differentiating each of a set of prints of a document is presented. A start command that instructs start of printing of one set of prints is sent to a printer. The printer prints the one set of the prints on, for example, a paper. Once the printing of the one set of the prints is over, an end command that instructs end of the printing is sent to the printer. Printing of a next set of prints can be started after this.

## Description

The present invention relates to a printer driver, a printer, and a method of printing in which a printer can print a plurality of sets of a document.

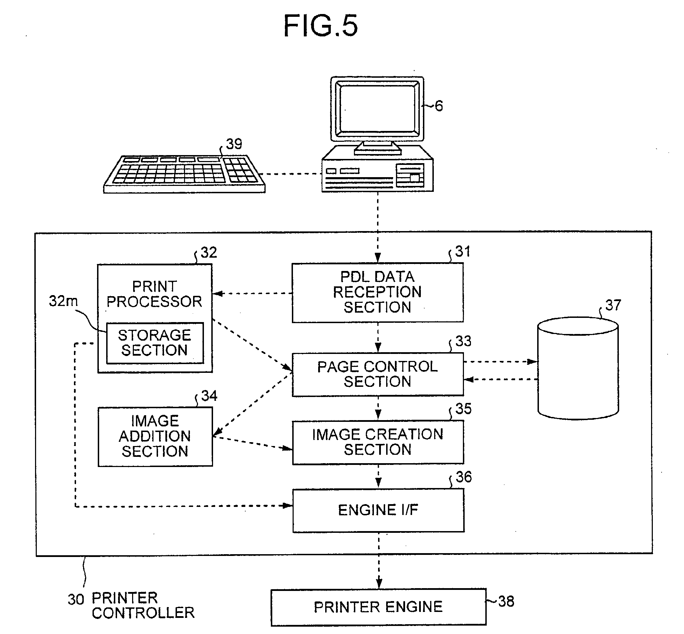

When printing a plurality of sets of a document, which has a plurality of pages, conventionally, a multi-sorter is attached to a printer and prints of each for the number of sets are discharged in individual bins. A conventional technology has been disclosed on the Japanese Laid-Open Application No. 2000-99303 (see particularly page 1 and Fig. 5).

This conventional technology has, however, has a disadvantage that the multi-sorter or the like needs to be attached to the printer. It is possible, however, to sort the prints without provision of the multy-sorter by providing a sort printing function to a printer driver. However when the sort-printing function is employed, the printer regards the entire prints sorted according to the sets as one set of prints. For this reason, if a finishing function is combined with the printing function, inappropriate results are obtained. For example, if a staple function is combined with the printing function, then by mistake all the sets may be stapled together.

Moreover, there is a demand to print number of a set on each set. For example, assuming that three sets of a document are to be printed, there is a demand to print "1" on the first set, print "2" on the second set, and "3" on the third set. By printing such numbers, if the document is a secret document, then it is possible to check whether a set has been lost. However, to print such numbers, the printer needs to be provided with dedicated mechanism for printing the numbers of the sets. Moreover, to increase the number of prints, the printer needs to be provided with dedicated mechanism.

It is an object of the present invention to at least solve the problems in the conventional technology.

The printer driver according to one aspect of the present invention contains instructions, which when executed on a computer, causes the computer to realize when a plurality of sets of prints of a document are to be made by a printer, transferring a start command that instructs start of printing to a printer; storing drawing data on an image to be printed by the printer in an external storage unit; creating page description language data based on the drawing data stored in the external storage unit; transferring the page description language data to the printer, and allowing the printer to print the page description language data; determining whether printing of one set of prints is over; and transferring an end command that instructs end of the printing to the printer when it is determined at the determining that printing of one set of prints is over.

The printer driver according to another aspect of the present invention contains instructions, which when executed on a computer, causes the computer to realize when a plurality of sets of prints of a document are to be made by a printer, transferring a start command that instructs start of printing to a printer; storing drawing data on an image to be printed by the printer in an external storage unit; creating page description language data based on the drawing data stored in the external storage unit; determining whether to add different pieces of information to each set of prints; setting the information to be added if it is determined at the determining to add the different pieces of information to each set of prints, and adding the information to the page description language data as a character string; transferring the page description language data to the printer, and allowing the printer to print the page description language data; determining whether printing of one set of prints is over; and transferring an end command that instructs end of the printing to the printer when it is determined at the determining that printing of one set of prints is over.

The printer according to still another aspect of the present invention comprises a storage unit that temporarily stores page description language data; an image creation unit that creates drawing data based on the page description language data stored in the storage unit; a printer engine that prints image data on a printing medium based on the drawing data; and a print processor that transfers a start command that instructs start of printing for each set of prints to the printer engine to thereby allow the printer engine to print the drawing data if a plurality of sets of prints are to be made, and that transfers an end command that instructs end of the printing for each set of prints to the printer engine when printing of one set of prints is over.

The printer according to still another aspect of the present invention comprises a storage unit that temporarily stores page description language data; an image creation unit that creates drawing data based on the page description language data stored in the storage unit; a printer engine that prints image data on a printing medium based on the drawing data; an image addition unit that sets different pieces of information to be added to a plurality of sets of prints and adds the information to the drawing data as a character string if the different pieces of information are to be added to the sets of prints, respectively in printing the sets of prints; a print processor that transfers a start command that instructs start of printing for each set of prints to the printer engine to thereby allow the printer engine to print the drawing data to which the different pieces of information have been added if a plurality of sets of prints are to be made, and that transfers an end command that instructs end of the printing for each set of prints to the printer engine when printing of one set of prints is over.

The method of printing according to still another aspect of the present invention comprises creating drawing data to be transferred to a printer engine based on page description language data input from a host apparatus; when a plurality of sets of prints of a document are to be printing, transferring a start command that instructs start of printing of one set of print to the printer engine to thereby allow the printer engine to print the drawing data created; and when the printing of the one set of prints is over, transferring an end command that instructs end of the printing to the printer engine.

The method of printing according to still another aspect of the present invention comprises creating drawing data to be transferred to a printer engine based on page description language data input from a host apparatus; when a plurality of sets of prints of a document are to be printing and when different pieces of information are to be added to each of the sets of prints, setting the information that is to be added, and adding the information to the drawing data; transferring a start command that instructs start of printing of one set of print to the printer engine to thereby allow the printer engine to print the drawing data created; and when the printing of the one set of prints is over, transferring an end command that instructs end of the printing to the printer engine.

These and other objects, features and advantages of the present invention are specifically set forth in or will become apparent from the following detailed descriptions of the invention when read in conjunction with the accompanying drawings
Figs. 1A and 1B are explanatory views that show the configuration of a printer driver in a first embodiment according to the present invention;
Fig. 2 is a flowchart that shows the processing procedures of the printer driver in the first embodiment;
Fig. 3 is a flowchart that shows a part of the processing procedures of the printer driver in a modification of the first embodiment;
Fig. 4 is an explanatory view that shows one example of the relationship between an information number L'ₙ and a symbol added to each set of prints;
Fig. 5 is an explanatory view that shows the configuration of a printer in a second embodiment according to the present invention; and
Fig. 6 is a flowchart that shows the processing procedures of the printer in the second embodiment.

Exemplary embodiments of the present invention will be explained hereinafter in detail with reference to the drawings. It should be noted that the present invention is not limited by the embodiments. In addition, the constituent elements of the following embodiments include those which a person having ordinary skill in the art could easily assume.

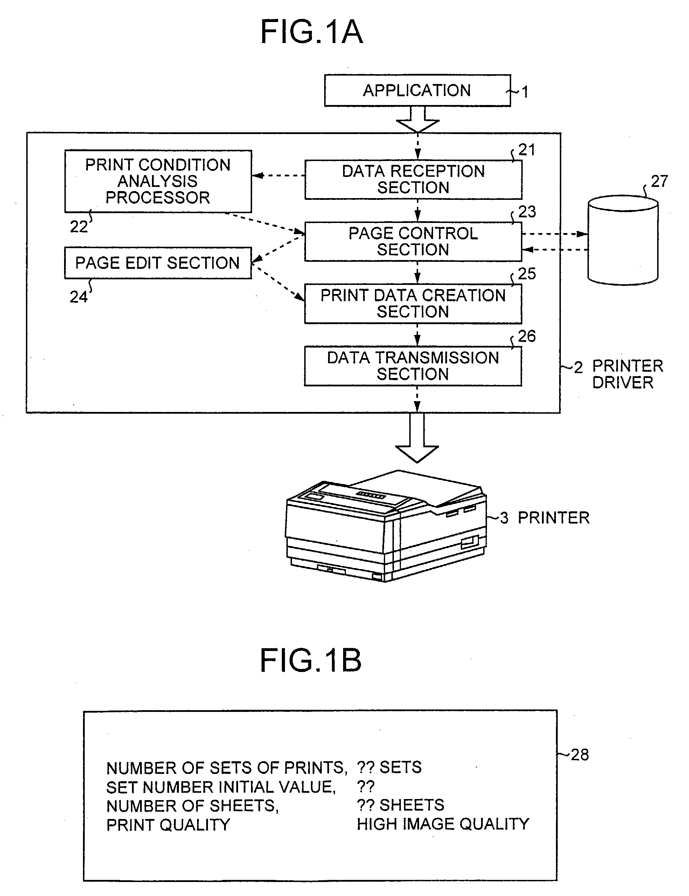

Fig. 1A and 1B are explanatory views that show the configuration of a printer driver in the first embodiment according to the present invention. This printer driver is characterized in that, when a plurality of sets of prints are to be made, the print driver issues a print start command and a print end command at the start of printing each set of prints and at the end thereof, respectively. As a result, according to this print driver, it becomes possible to separate printing of each set. This printer driver is also characterized in that it creates pieces of page description language (PDL) data, to which different pieces of information are added according to sets of prints, from drawing data. This function makes it possible to add different pieces of information to each set. It is noted that this printer driver is realized as a software, which is a computer program.

An application 1 shown in Fig. 1A outputs print-related data to a printer driver 2. The printer driver 2 is comprised of a data reception section 21 that receives the data from the application 1, a print condition analysis processor 22 that analyzes print conditions such as the number of sets of prints, whether to add set numbers, and a set number initial value, a page control section 23 that controls a disk apparatus 27 serving as an external storage unit arranged outside of the printer driver 2 to store the drawing data, a page edit section 24, a print data creation section 25 that creates the PDL data from the drawing data stored in the disk apparatus 27, and a data transmission section 26 that transmits the PDL data thus created to a printer 3.

The disk apparatus 27 that serves as an external storage unit may be included in a host computer on which the printer driver 2 is mounted. Alternatively, the disk apparatus 27 may be provided in the other apparatus such as a database server, and the page control section 23 may access to the disk apparatus 27 by communication. As the external storage unit, not only the disk apparatus 27, such as a hard disk apparatus or a magneto-optical disk apparatus, but also a nonvolatile memory such as a flash memory, a read-only storage medium such as a compact disk read only memory (CD-ROM), a volatile memory such as a random access memory (RAM), or a combination thereof can be employed.

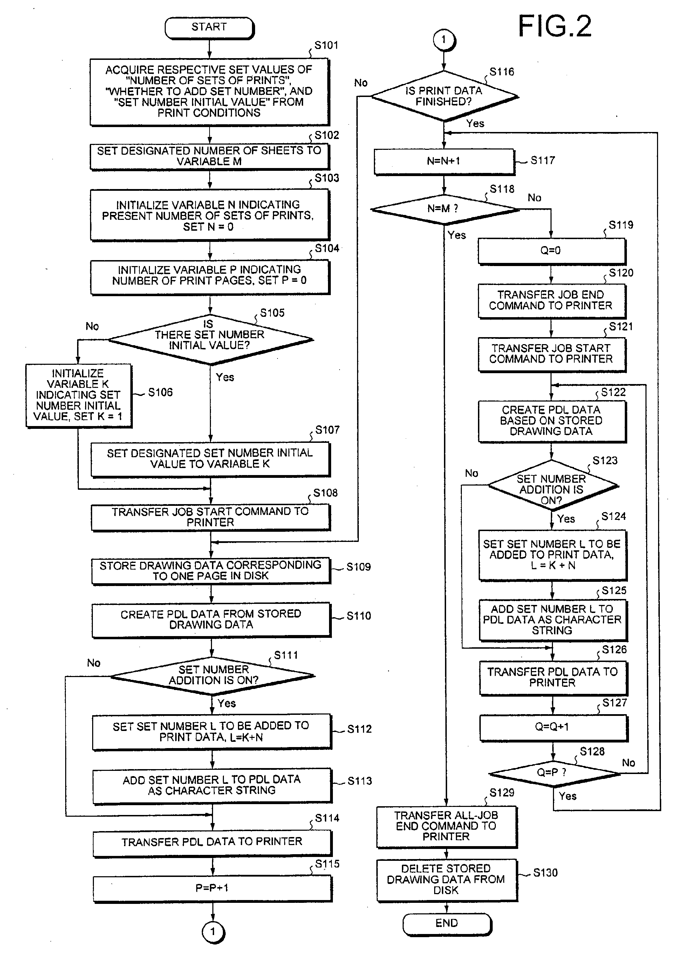

Fig. 2 is a flowchart of the processes performed by the printer driver according to the first embodiment. If prints are to be made from the application 1, a user first sets the number of sets of prints, whether to add set numbers, a set number initial value, the number of sheets, print quality, and the other print information using a printer driver user interface 28 (see Fig. 1B) provided in this printer driver 2.

After the user sets the print information, a print start command is fed to the printer driver 2, whereby the printer driver 2 starts a print processing. After the print processing starts, the printer driver 2 acquires respective set values related to set printing, i.e., "the number of sets of prints", "whether to add set numbers", and "the set number initial value" from the print conditions through the data reception section 21 (at step S101). The printer driver 2 then sets the designated number of sets of prints to a variable M based on the set values (at step S102). Further, the printer driver 2 initializes a valuable N that indicates the present number of sets of prints, and sets N = 0 (at step S103). In addition, the printer driver 2 initializes a variable P that indicates the number of print pages and sets P = 0 (at step S104).

The printer driver 2 determines whether there is a set number initial value based on the "set number initial value" sets at the step S101 (at step S105). If there is no initial value, the printer driver 2 initializes a variable K that indicates the set number initial value and sets K = 1 (at step S106). If there is a set number initial value or, for example, if set numbers start at "3", the printer driver 2 sets the variable K to the designated set number (at step S107).

To separate a job according to each set of prints, the printer driver 2 transfers a job start command that instructs the start of printing to the printer 3 through the data transmission section 26 (at step S108). The page control section 23 stores drawing data corresponding to one page in the disk apparatus 27 (at step S109), and the print data creation section 25 creates the PDL data from the stored drawing data (at step S110).

The printer driver 2 determines whether to add a set number to print pages (at step S111). If it is determined that the set number is to be added, the printer driver 2 sets a set number L = K + N to be added to the print data (created PDL data) (at step S112). For example, if N = 0 and K = 1, the set number L = 1 is set. The page edit section 24 adds this set number L to the PDL data as a character string (at step S113). It is noted that this character string is added not as numerical data but as character data (this also applies hereafter). Besides the set numbers, graphics, designs, symbols, or the other information such as distribution destination information may be added to the print pages of the respective sets of prints (this also applies hereafter). The addition method will be explained later.

The data transmission section 26 transmits the PDL data to the printer 3 (at step S114). Upon finishing the transmission, the printer driver 2 adds 1 to the variable P that indicates the number of print pages and sets P = P + 1 (at step S115). The printer driver 2 determines whether the print data processing is finished up to the predetermined number of print pages P (at step S116). If it is determined that the processing is not finished up to the predetermined number of print pages P ("No" at step S116), the printer driver 2 repeatedly executes the processing procedures starting at the step S109. If the print data processing has been finished ("Yes" at step S116), the printer driver 2 adds 1 to the variable N that indicates the number of sets of prints and sets N = N + 1 (at step S117). If N = 0, the printer driver 2 sets N = 1.

The printer driver 2 then determines whether the variable N that indicates the number of sets of prints reaches the designated number of sets of prints M set at the step S102 (at step S118). If it is determined that the variable N has not reached the designated number of sets of prints M ("No" at step S118), the printer driver 2 sets a variable Q at 0 (Q = 0) (at step S119). To separate a job according to each set of print, the data transmission section 26 transfers a job end command to instruct the end of each job to the printer 3 (at step S120). If the print processor 32 of the printer 3 determines this job end command, it is possible to subject each set of prints to a finishing processing such as staple processing for each separated job. Thereafter, to start a job according to a new set, the data transmission section 26 transmits a job start command to instruct the start of the job to the printer 3 (at step S121). The print data creation section 25 creates PDL data based on the already stored drawing data (at step S122).

The printer driver 2 determines whether to add a set number to the print pages (at step S123). If it is determined that the set number is to be added, the printer driver 2 sets the set number L = K + N to be added to the print data (at step S124). If the variable N that indicates the number of sets of prints is 1 (N = 1) and the variable K that indicates the set number initial value is 1 (K = 1), then the set number L = 2 is set. The page edit section 24 adds the set number L to the PDL data as a character string (at step S125).

If these steps are finished, the data transmission section 26 outputs the pieces of PDL data to which the set numbers are added, respectively, to the printer 3 (at step S126), and adds 1 to the variable Q (Q = Q + 1) (at step S127). The printer driver 2 determines whether the variable Q reaches the predetermined number of print pages P (at step S128). If it is determined that the variable Q has not reached the predetermined number of print pages P ("No" at step S128), the printer driver 2 repeatedly executes the processing procedures starting at the step S122. If it is determined that the variable Q has reached P ("Yes" at step S128), the printer driver 2 adds 1 to the variable N that indicates the number of sets of prints (N = N + 1). If N = 1, the printer driver 2 sets N = 2.

At the step S118 again, the printer driver 2 determines whether the variable N that indicates the number of sets of prints reaches the designated number of sets of prints M set at the step S102. If it is determined that the variable N has not still reached M ("No" at step S118), the printer driver 2 repeats the processing procedures starting at the step S119. If the printer drive 2 determines that the variable N reaches M ("Yes" at step S118), the data transmission section 26 transmits an all-job end command instructing the end of all jobs to the printer 3. In response to this all-job end command, the printer driver 2 deletes the drawing data stored in the disk apparatus 27 from the disk apparatus 27, and finishes all processing procedures (at step S130).

In this printer driver 2, the print jobs are separated according to the sets of prints using the job start command at the step S108 or S121 and the job end command at the step S120. Since different pieces of information can be added to the pieces of PDL data on the sets of prints in the jobs for the respective sets of prints, it is possible to add different pieces of information (that is, the set numbers) to the respective sets of prints. In other words, since the set number, graphics, a character or character string can be printed on each set, it is possible to prevent theft of the printed material. In addition, the sets of prints can be sorted using the job start command and the job end command. Further, based on the job end command, each separated set of prints can be subjected to a finishing processing such as, for example, a staple processing in a normal manner. Also, since a number of sets to be printed can be set before starting the printing, it is possible to easily increase or decrease the number of sets to be printed.

Furthermore, according to this printer driver 2, it is possible to perform sort-printing without the need of adding a storage unit such as a hard disk to the printer. In addition, according to this printer driver 2, it is possible to respectively add different pieces of information to a plurality of sets of prints, regardless of the type of the printer 3. Consequently, even if different printers are switched over in a network in which a plurality of computers, a plurality of printers and the like are connected to one another, it is possible to easily add different pieces of information to the sets of prints, respectively.

Moreover, the printer driver 2 may be intended to implement a part of the functions explained above, or may be intended to implement the functions in combination with a program already recorded on a computer system. This "computer system" used herein involves not only a personal computer, a workstation, a server and the like but also hardware such as an Operating System (OS) and peripherals.

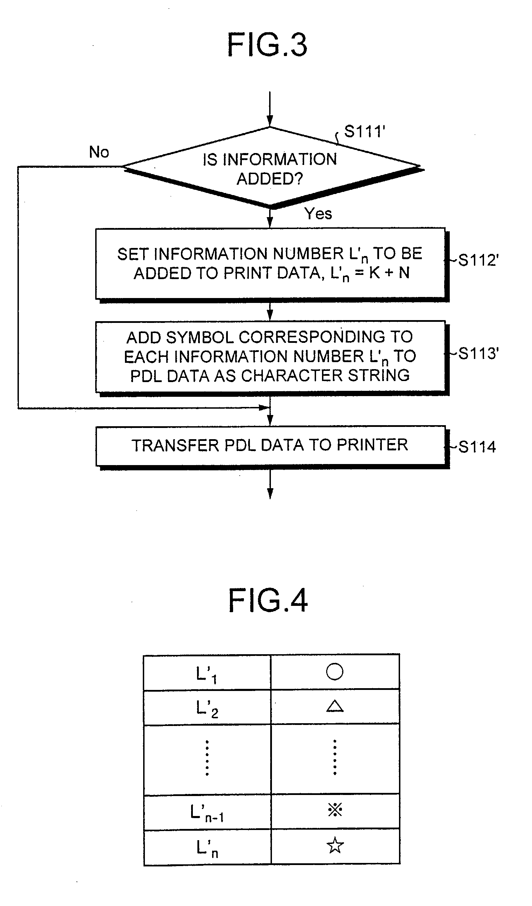

Fig. 3 is a flowchart that shows a part of the processes performed by the printer driver that is a modification of the same in the first embodiment. The printer driver in the modification has almost the same processing functions as those of the printer driver 2 in the first embodiment except that information other than the set number is added to each set of prints. Since the other processing functions of this printer driver are the same as those of the printer driver 2, they will not be explained herein. In the following explanation, an example of adding different symbols to the respective sets of prints in place of the set numbers will be explained.

Fig. 4 is an explanatory view that shows one example of the relationship between an information number L'ₙ and a symbol added to each set of prints. As shown in Fig. 4, different symbols added to sets of prints correspond to information numbers L'₁ to L'ₙ (where n is a natural number), respectively. By adding these symbols or information numbers, it is possible to add different graphics to the respective sets of prints using L'ₙ as parameters. It is noted that the relationship between each graphic and the information number L'ₙ is stored in advance, as a table, in the disk apparatus 27 that serves as the external storage unit or in the other storage unit.

The flowchart shown in Fig. 3 will now be explained. At a step S111' at which the printer driver determines whether to add, as information, symbols to print pages, if the printer driver determines to add symbols thereto, the printer driver sets the information number L'ₙ = K + N to be added to the print data (created PDL data) (at step S112'). For example, if N = 0 and K = 1, the set number L'ₙ = 1 is set. In addition, the printer driver adds a symbol corresponding to each information number L'ₙ to the PDL data as a character string (at step S113'). Through this process, it is possible to print different symbols, characters or graphics other than the set numbers according to the sets of prints. Since the steps after the step S113' and those before the step S111' are the same as those in the first embodiment (see Fig. 2), they will not be explained herein to avoid simple repetition of explanation.

Fig. 5 is an explanatory view that shows the configuration of a printer in a second embodiment according to the present invention. This printer 5 is as follows. If a plurality of sets of prints are to be made, a print start command and a print end command are issued at the start of printing each set of prints and at the end thereof, respectively, thereby making it possible to separate printing according to sets. This printer 5 is also as follows. Pieces of PDL data to which different pieces of information are added according to sets of prints is created from drawing data, thereby making sets of prints while adding different pieces of information thereto, respectively.

In Fig. 5, a host computer 6 outputs PDL data to a printer controller 30. The printer controller 30 consists of a PDL data reception section 31 that receives the PDL data from the host computer 6, a print processor 32 that analyzes print conditions such as the number of sets of prints, whether to add set numbers, and a set number initial value, and that controls a page control section 33 and the image addition section 34, the page control section 33 that controls a disk apparatus 37 serving as a storage unit to store the PDL data, an image addition section 34 that adds different pieces of information to the respective sets of prints in accordance with a command, an image creation section 35 that creates drawing data from the PDL data, an engine Interface (I/F) 36 that transmits the drawing data thus created to a printer engine 38, an input unit 39, such as a keyboard, through which a user inputs print information to the host computer 6, and the like.

It is noted that the printer controller 30, the print processor 32 that constitutes the printer controller 30 and the like may be realized by dedicated hardware. In addition, this printer controller 30 and the like may consist of a memory and a CPU, and the functions of the printer controller 30 and the like may be implemented by loading a program for implementing the functions to the memory and executing them.

In addition, as the storage unit, not only the disk apparatus 37, such as a hard disk apparatus or a magneto-optical disk apparatus, but also a nonvolatile memory such as a flash memory, a read-only storage medium such as a CD-ROM, a volatile memory such as a RAM, or a combination thereof can be used.

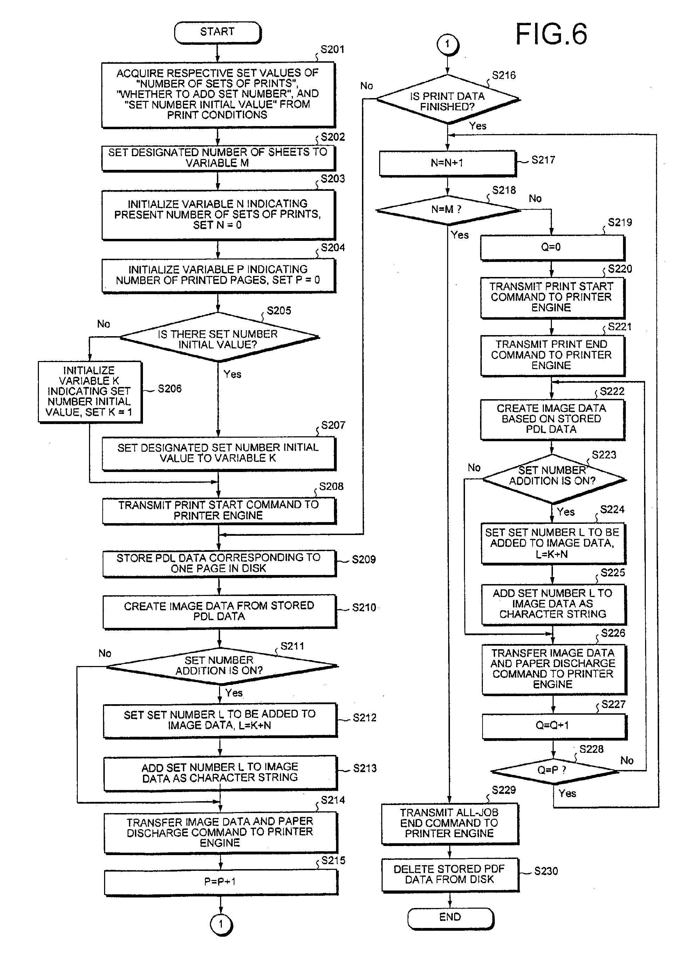

Fig. 6 is a flowchart that shows the processing procedures of the printer driver in the second embodiment. The processing procedures of the printer in this embodiment will be explained with reference to Fig. 6. If prints are to be made from the host computer 6, a user first sets the number of sets of prints, whether to add set numbers, a set number initial value, the number of sheets, print quality, and the other print information using the input unit 39 provided in this host computer 6.

After the user sets the print information, PDL data is fed from the host computer 6 to the PDL data reception section 31 of the printer controller 30, whereby the printer controller 30 starts a print processing. After the print processing starts, the printer controller 30 acquires respective set values related to set printing, i.e., "the number of sets of prints", "whether to add set numbers", and "the set number initial value" from the print conditions (at step S201). The print processor 32 then sets the designated number of sets of prints to the variable M based on the set values (at step S202). Further, the print processor 32 initializes the valuable N that indicates the present number of sets of prints, and sets N = 0 (at step S203). In addition, the print processor 32 initializes the variable P that indicates the number of print pages and sets P = 0 (at step S204).

The print processor 32 determines whether there is a set number initial value based on the "set number initial value" set at the step S201 (at step S205). If there is no initial value, the print processor 32 initializes the variable K that indicates the set number initial value to set the set number and sets K = 1 (at step S206). If there is a set number initial value or, for example, if set numbers start at "3", the print processor 32 sets the variable K to the designated set number (at step S207).

To separate a job according to each set of prints, the print processor 32 transfers a print start command that instructs the start of printing to the printer engine 38 through the engine I/F 36 (at step S208). The page control section 33 stores drawing data corresponding to one page in the disk apparatus 27 (at step S209), and the image creation section 35 creates drawing data from the stored PDL data (at step S210).

The image addition section 34 determines whether to add, as information, a set number to print pages (at step S211). If it is determined that the set number is to be added, the image addition section 34 sets the set number L = K + N to be added to the print data (created PDL data) (at step S212). For example, if N = 0 and K = 1, the set number L = 1 is set. The image addition section 34 adds this set number L to the drawing data as a character string (at step S213).

The image creation section 35 transfers the drawing data and a paper discharge command to the printer engine 38 through the engine I/F 36 (at step S214). Upon finishing the transfer, the image creation section 35 adds 1 to the variable P that indicates the number of print pages and sets P = P + 1 (at step S215), and stores the resultant variable P in a storage section 32m of the print processor 32. The print processor 32 determines whether the print data processing is finished up to the predetermined number of print pages P (at step S216). If it is determined that the processing is not finished up to the predetermined number of print pages P ("No" at step S216), the print processor 32 repeatedly executes the processing procedures starting at the step S209. Upon finishing the print data processing ("Yes" at step S216), the print processor 32 adds 1 to the variable N that indicates the number of sets of prints and sets N = N + 1 in the storage section 32m of the print processor 32 (at step S217). If N = 0, the print processor 32 sets N = 1.

The print processor 32 then determines whether the variable N that indicates the number of sets of prints reaches the designated number of sets of prints M set at the step S202 (at step S218). If the variable N has not reached M ("No" at step S218), the print processor 32 sets the variable Q at 0 (Q = 0) (at step S219). To separate a job according to each set of print, the print processor 32 creates a print end command to instructs the end of each job and transfers the print end command to the printer engine 38 (at step S220). By this print end command, it is possible to subject each set of prints to a finishing processing such as staple processing for each set of prints. Thereafter, to start printing according to a new set, the print processor 32 transfers a print start command to instruct the start of the job to the printer engine 38 (at step S221). The print processor 32 creates drawing data based on the already stored PDL data (at step S222).

The print processor 32 determines whether to add a set number to the print pages (at step S223). If it is determined that the set number is to be added, the print processor 32 sets the set number L = K + N to be added to the print data (at step S224). If the variable N that indicates the number of sets of prints is 1 (N = 1) and the variable K that indicates the set number initial value is 1 (K = 1), then the set number L = 2 is set. The print processor 32 adds the set number L to the PDL data as a character string (at step S225).

The image creation section 35 outputs the pieces of drawing data to which the set numbers are added, respectively, to the printer engine 38 (at step S226), and the print processor 32 adds 1 to the variable Q (Q = Q + 1) (at step S227). The print processor 32 determines whether the variable Q reaches the predetermined number of print pages P (at step S228). If it is determined that the variable Q has not reached P ("No" at step S228), the print processor 32 repeatedly executes the processing procedures starting at the step S122. If it is determined that the variable Q has reached P ("Yes" at step S228), the print processor 32 adds 1 to the variable N that indicates the number of sets of prints (N = N + 1). If N = 1, the print processor 32 sets N = 2.

At the step S218 again, the print processor 32 determines whether the variable N that indicates the number of sets of prints reaches the designated number of sets of prints M set at the step S202. If it is determined that the variable N has not still reached M ("No" at step S218), the print processor 32 repeats the processing procedures starting at the step S219. If it is determined that the variable N has reached M ("Yes" at step S218), the print processor 32 transmits an all-job end command instructing the end of all jobs to the printer engine 38 and ends the printing (at step S229). In response to this all-job end command, the print processor 32 deletes the drawing data stored in the disk apparatus 37 from the disk apparatus 27, and finishes all processing procedures (at step S230).

In this printer 5, the print jobs are separated according to the sets of prints using the print start command at the step S208 or S221 and the print end command at the step S220. Since different pieces of information can be added to the pieces of drawing data on the sets of prints in the jobs for the respective sets of prints, it is possible to add different pieces of information (set numbers in this embodiment) to the respective sets of prints. In addition, the sets of prints can be sorted using the print start command and the print end command. Further, based on the print end command, each separated set of prints can be subjected to a finishing processing such as, for example, a staple processing in a normal manner.

As explained so far, according to the printer driver according to the first aspect of the present invention, a start command to instruct the start of printing for each set of prints and an end command to instruct the end of printing for each set of prints are issued if a plurality of sets of prints are to be made by the printer. It is, therefore, possible to separate a print job according to each set of prints, and to thereby normally sort a plurality of sets of prints. In addition, even if a finishing function such as a staple function is used, it is possible to normally execute a post-processing such as a staple processing for each set of prints. Further, the functions of this printer driver can be exhibited by installing, as a software, the printer driver to a computer or the like. It is, therefore, possible to sort and finish the prints without the need of adding a storage device such as a hard disk to the printer side.

According to the printer driver according to the second aspect, the print job is separated according to each set of print. It is, therefore, possible to normally sort a plurality of sets of prints, and to normally execute a post-processing such as a staple processing for each set of prints. In addition, this printer driver adds, as character strings, different pieces of information to the sets of prints, respectively. It is, therefore, possible to make prints, without the provision of a separate mechanism to the printer, while adding thereto set numbers (third aspect), graphics, a character or a character string, and the other information, and to thereby prevent the illegal leakage of confidential documents.

According to the printer driver according to the fourth aspect, each of the set numbers that designates the number of each set of prints is set before the start of printing. It is, therefore, possible to add the set numbers and make added sets of prints without the provision of a separate mechanism to the printer.

According to the printer according to the fifth aspect, a start command to instruct the start of printing for each set of prints and an end command to instruct the end of printing for each set of prints are issued. It is, therefore, possible to separate a print job according to each set of prints, and to thereby normally sort a plurality of sets of prints. Even if a finishing function such as a staple function is used, it is possible to normally execute a post-processing such as a staple processing for each set of prints.

According to the printer according to the sixth aspect, the print job is separated according to each set of print. It is, therefore, possible to normally sort a plurality of sets of prints, and to normally execute a post-processing such as a staple processing for each set of prints. In addition, this printer adds, as character strings, pieces of information different according to the respective sets of prints to drawing data related to the printing, respectively. It is thereby possible to make prints, without the provision of a separate mechanism to the printer, while adding thereto set numbers different according to the sets of prints (seventh aspect), graphics, a character or a character string, and the other information, and to thereby prevent the illegal leakage of confidential documents.

According to the printer according to the eighth aspect, each of the set numbers that designates the number of each set of prints is set before the start of printing. It is, therefore, possible to add the number of sets and make added sets of prints without the provision of a separate mechanism to the printer.

According to the method of printing of the ninth aspect, a start command to instruct the start of printing for each set of prints and an end command to instruct the end of printing for each set of prints are issued. It is thereby possible to normally sort a plurality of sets of prints for the printer. In addition, even if a finishing function such as a staple function is used, it is possible to normally execute a post-processing such as a staple processing for each set of prints.

According to the method of printing of the tenth aspect, it is possible to normally sort a plurality of sets of prints, and to normally execute a post-processing such as a staple processing for each set of prints even if a finishing function such as a staple function is used. In addition, this printer controller adds, as character strings, pieces of information different according to the sets of prints, respectively to the drawing data related to the printing. It is, therefore, possible to make prints, without the provision of a separate mechanism to the printer, while adding thereto set numbers different according to the sets of prints (eleventh aspect), graphics, a character or a character string, and the other information, and to thereby prevent the illegal leakage of confidential documents.

According to the method of printing of the twelfth aspect, each of the set numbers that designates the number of each set of prints is set before the start of printing. It is, therefore, possible to add the number of sets and make added sets of prints without the provision of a separate mechanism to the printer.

The present document incorporates by reference the entire contents of Japanese priority documents, 2002-081786 filed in Japan on March 22, 2002 and 2003-061968 filed in Japan on March 7, 2003.

Although the invention has been described with respect to a specific embodiment for a complete and clear disclosure, the appended claims are not to be thus limited but are to be construed as embodying all modifications and alternative constructions that may occur to one skilled in the art which fairly fall within the basic teaching herein set forth.

## Claims

1. A printer driver comprising code means that, when executed on a computer system, instruct the computer system to perform the steps of:
when a plurality of sets of prints of a document are to be made by a printer, transferring a start command that instructs start of printing to a printer;
storing drawing data of an image to be printed by the printer in an external storage unit;
creating page description language data based on the drawing data stored in the external storage unit;
transferring the page description language data to the printer, and allowing the printer to print the page description language data;
determining whether printing of one set of prints is over; and
transferring an end command that instructs end of the printing to the printer when it is determined at the determining that printing of one set of prints is over.

2. A printer driver comprising code means that, when executed on a computer system, instruct the computer system to perform the steps of:
when a plurality of sets of prints of a document are to be made by a printer, transferring a start command that instructs start of printing to a printer;
storing drawing data of an image to be printed by the printer in an external storage unit;
creating page description language data based on the drawing data stored in the external storage unit;
determining whether to add different pieces of information to each set of prints;
setting the information to be added if it is determined at the determining to add the different pieces of information to each set of prints, and adding the information to the page description language data as a character string;
transferring the page description language data to the printer, and allowing the printer to print the page description language data;
determining whether printing of one set of prints is over; and
transferring an end command that instructs end of the printing to the printer when it is determined at the determining that printing of one set of prints is over.

3. The printer driver according to claim 2, wherein the different pieces of information are set numbers.

4. The printer driver according to claim 3, further comprising setting the set numbers before transferring the start command to the printer.

5. A printer comprising:
a storage unit that temporarily stores page description language data;
an image creation unit that creates drawing data based on the page description language data stored in the storage unit;
a printer engine that prints image data on a printing medium based on the drawing data; and
a print processor that transfers a start command that instructs start of printing for each set of prints to the printer engine to thereby allow the printer engine to print the drawing data if a plurality of sets of prints are to be made, and that transfers an end command that instructs end of the printing for each set of prints to the printer engine when printing of one set of prints is over.

6. A printer comprising:
a storage unit that temporarily stores page description language data;
an image creation unit that creates drawing data based on the page description language data stored in the storage unit;
a printer engine that prints image data on a printing medium based on the drawing data;
an image addition unit that sets different pieces of information to be added to a plurality of sets of prints and adds the information to the drawing data as a character string if the different pieces of information are to be added to the sets of prints, respectively in printing the sets of prints;
a print processor that transfers a start command that instructs start of printing for each set of prints to the printer engine to thereby allow the printer engine to print the drawing data to which the different pieces of information have been added if a plurality of sets of prints are to be made, and that transfers an end command that instructs end of the printing for each set of prints to the printer engine when printing of one set of prints is over.

7. The printer according to claim 6, wherein the different pieces of information are set numbers.

8. The printer according to claim 7, wherein the print processor sets the set number before transferring the start command to the printer engine.

9. A method of printing comprising:
creating drawing data to be transferred to a printer engine based on page description language data input from a host apparatus;
when a plurality of sets of prints of a document are to be printing, transferring a start command that instructs start of printing of one set of print to the printer engine to thereby allow the printer engine to print the drawing data created; and
when the printing of the one set of prints is over, transferring an end command that instructs end of the printing to the printer engine.

10. A method of printing comprising:
creating drawing data to be transferred to a printer engine based on page description language data input from a host apparatus;
when a plurality of sets of prints of a document are to be printing and when different pieces of information are to be added to each of the sets of prints, setting the information that is to be added, and adding the information to the drawing data;
transferring a start command that instructs start of printing of one set of print to the printer engine to thereby allow the printer engine to print the drawing data created; and
when the printing of the one set of prints is over, transferring an end command that instructs end of the printing to the printer engine.

11. The method according to claim 10, wherein the different pieces of information are set numbers.

12. The method according to claim 11, further comprising setting the set numbers before transferring the start command to the printer engine.
